# EUROPÄISCHE PATENTSCHRIFT

(11) **EP 3 389 975 B1**
(45) Veröffentlichungstag und Bekanntmachung des Hinweises auf die Patenterteilung: **19.02.2020**
(21) Anmeldenummer: 16797745.3
(22) Anmeldetag: 15.11.2016
(51) Int. Cl.: B29C 45/14, B44C 5/04, B44F 1/04, B44F 7/00

(54) **VERFAHREN ZUR ERZEUGUNG VON VIRTUELLEN DREIDIMENSIONALEN MUSTERN IN FORMKÖRPERN**
METHOD FOR CREATING VIRTUAL THREE-DIMENSIONAL PATTERNS IN MOLDED BODIES
PROCÉDÉ DE PRODUCTION DE MOTIFS VIRTUELS TRIDIMENSIONNELS DANS DES CORPS MOULÉS

(30) Priorität: 15.12.2015 EP 15200127
(43) Veröffentlichungstag der Anmeldung: 24.10.2018
(73) Patentinhaber: Merck Patent GmbH, 64293 Darmstadt (DE)
(72) Erfinder: SCHUM, Markus, 64385 Reichelsheim (DE)
(86) Internationale Anmeldenummer: PCT/EP2016/001904
(87) Internationale Veröffentlichungsnummer: WO 2017/102047

(56) Entgegenhaltungen:
- EP-A1- 2 930 066
- EP-A1- 2 960 039
- WO-A1-2013/123960
- JP-A- H04 128 041
- JP-A- 2003 103 709
- US-A- 4 495 125
- US-A1- 2002 048 667
- US-A1- 2003 122 278
- DATABASE WPI Week 199307 Thomson Scientific, London, GB; AN 1993-055006 XP002766020, -& JP H05 4310 A (DAINIPPON PRINTING CO LTD) 14. Januar 1993 (1993-01-14)

## Beschreibung

Die vorliegende Erfindung bezieht sich auf ein Verfahren zur Erzeugung von virtuellen dreidimensionalen Mustern in Formkörpern, vorzugsweise von Kunststoffformkörpern, und insbesondere auf ein Spritzgießverfahren zur Herstellung von Formkörpern, die auf mindestens einer ihrer Oberflächen ein virtuelles dreidimensionales Muster aufweisen, welches durch plättchenförmige Effektpigmente gebildet wird, auf einen Formkörper, welcher ein solches virtuelles dreidimensionales Muster aufweist, sowie auf dessen Verwendung.

Dekorative dreidimensionale Muster auf Kunststoffartikeln sind bekannt und bereits seit längerer Zeit im Einsatz. Sie verleihen den genannten Gütern ein exklusives Erscheinungsbild, das Tiefe suggeriert und sich in vorteilhafter Weise von üblichen Musterungen unterscheidet. Häufig werden die Formkörper oder Folien auf mindestens einer ihrer Oberflächen verprägt oder anderweitig strukturiert, um letztendlich ein dreidimensionales Muster aufzuweisen. Um besondere optische. Effekte zu erzielen, werden sowohl Formkörper als auch Folien oft mehrschichtig zusammengesetzt und im Schichtverbund verprägt. Darüber hinaus können sie noch mit funktionellen und/oder dekorativen Beschichtungen, gewöhnlich in Form von Lacken, versehen werden, die gegebenenfalls auch Metalleffektpigmente und dergleichen enthalten können, um beispielsweise den Glanz der dreidimensionalen Strukturen zu erhöhen.

Solche Strukturierungsverfahren sind oft mit einem hohen apparativen Aufwand verbunden. Dreidimensional verprägte Oberflächen von polymeren Formkörpern weisen außerdem den Nachteil auf, dass sie schmutzanfällig sind und gegen mechanische Verformungen nur unzureichend geschützt werden können.

Es sind daher bereits verschiedene Verfahren entwickelt worden, mit deren Hilfe polymere Formkörper, wobei es sich in der Regel um Folien handelt, so mit dreidimensionalen Mustern versehen werden können, dass diese Muster für den Betrachter zwar optisch, aber nicht haptisch wahrnehmbar sind.

So sind beispielsweise aus der JP-A-07-137221 und aus der JP-A-05-092538 dekorative Schichtsysteme bekannt, die jeweils zwischen einem polymeren Substrat und einer polymeren Deckschicht verprägte oder anderweitig strukturierte Schichten enthalten, in denen auch Glanzpigmente, meist über Druckfarben aufgebracht, enthalten sein können. Das Herstellen solcher Verbundmaterialien erfordert eine Vielzahl von verschiedenen Arbeitsschritten sowie das aufwändige Laminieren oder anderweitige Verbinden unterschiedlicher Materiallagen miteinander.

Auf diese Weise sind außerdem lediglich flächige, also weitestgehend zweidimensionale Formkörper, wie beispielsweise Dekorfolien, herstellbar, während Formkörper mit ausgeprägt dreidimensionaler Gestalt nicht herstellbar sind.

Die Zwischenveröffentlichung EP2960039 A1 offenbart ein Spritzgießverfahren zur Herstellung eines polymeren Formkörpers, welcher auf mindestens einer seiner Oberflächen ein dreidimensionales Muster aufweist, wobei
- ein Spritzgießwerkzeug bereitgestellt wird, welches voneinander trennbare Spritzgießteilformen A und B aufweist, die jeweils eine innere Oberfläche A' und B' aufweisen und zusammen einen inneren Hohlraum bilden, wobei die innere Oberfläche A' Erhebungen und/oder Vertiefungen auf einer Grundfläche aufweist, die ein dreidimensionales Muster bilden, und wobei bei geöffnetem Spritzgießwerkzeug
- eine thermoplastische Folie, die mit plättchenförmigen Effektpigmenten pigmentiert ist, an der Oberfläche A' fixiert wird,
- das Spritzgießwerkzeug geschlossen wird,
- eine transparente thermoplastische Kunststoffschmelze in den inneren Hohlraum zwischen der thermoplastischen Folie und der Oberfläche B' der Spritzgießteilform B eingetragen wird,
- das Spritzgießwerkzeug temperiert oder gekühlt und nachfolgend
- der polymere Formkörper entformt oder entnommen wird.

JP-5-004310 A1 offenbart einen Schichtverbundwerkstoff, der eine Zwischenschicht aus einem thermoplastischen Kunststoff, die mit plättchenförmigen Effektpigmenten pigmentiert ist, aufweist, und mit einer äußeren Oberflächenschicht aus einem transparenten thermoplastischen Kunststoff versehen ist.

Aus der DE 10 2004 041 833 A1 ist ein Verfahren zur Herstellung eines dekorierten Spritzgussartikels bekannt, bei dem eine Transferfolie, welche ein Dekorelement enthält, welches sich auf einer Trägerfolie befindet, diemit einer Ablöseschicht versehen ist, auf der der Trägerfolie abgewandten Seite in einer Spritzgussform mit einer Kunststoffspritzmasse beschichtet wird, die Trägerfolie nachfolgend abgelöst und der so vorgefertigte Formkörper in einer zweiten Spritzgussform auf der Transferfolienseite ebenfalls mit einer Spritzgussmasse beschichtet wird. Der resultierende polymere Formkörper enthält im Inneren die das Dekor tragende Übertragungslage der Transferfolie. Bei dem Dekor kann es sich um Hologramme oder diffraktive Strukturen handeln, die während der beiden Spritzgießschritte unverändert bestehen bleiben und im resultierenden polymeren Formkörper beidseitig sichtbar sind.
Obwohl bei diesem Verfahren optisch attraktive polymere Formkörper mit haptisch nicht erfassbaren Mustern entstehen, bei denen die Muster dreidimensionale Formen aufweisen können, ist ein solches Verfahren nur mit einem hohem apparativen und materiellen Aufwand zu bewerkstelligen. So müssen zunächst mehrlagige Transferfolien mit aufwändig hergestellten Musterzwischenlagen vorgefertigt werden, die anschließend mittels zweier verschiedener Spritzgiesswerkzeuge nacheinander beidseitig beschichtet werden müssen. Zur Herstellung von Massenartikeln ist ein solches Verfahren viel zu aufwändig und daher nicht ökononisch einsetzbar.

Darüber hinaus lassen sich mit dem vorab genannten Verfahren lediglich Formkörper herstellen, die überwiegend aus polymeren Kunststoffen bestehen. Das Verfahren eignet sich nicht für die Herstellung von Verbundformkörpern, die neben dem Kunststoffanteil noch zu nicht unerheblichen Masseanteilen aus anderen Werkstoffen, beispielsweise aus Metallen, bestehen.

Es wäre daher wünschenswert, ein einfaches, schnelles und vergleichsweise kostengünstiges Herstellungsverfahren für Formkörper zur Verfügung zu haben, das zur Herstellung von polymeren Formkörpern sowie von Verbundformkörpern, die jeweils eine zwei- oder dreidimensionale äußere Gestalt aufweisen, gleichermaßen geeignet ist, wobei die Formkörper bei Betrachtung ihrer Oberfläche ein optisch, aber nicht haptisch, wahrnehmbares, dreidimensional erscheinendes Muster zeigen, welches mit wenigen Verfahrensschritten und mit üblichen Werkzeugen ausführbar ist, wobei es sich bei dem Muster um ein attraktives, glänzendes, dreidimensional erscheinendes Muster im Inneren des Formkörpers handelt, sowie derart hergestellte Formkörper.

Die Aufgabe der vorliegenden Erfindung besteht daher darin, ein Verfahren zur Verfügung zu stellen, welches die Herstellung von glänzenden, dreidimensional erscheinenden Mustern mit feinen Linienstrukturen innerhalb von zwei- oder dreidimensional geformten Formkörpern verschiedenster Zusammensetzung in wenigen Arbeitsschritten mittels an sich bekannter Verformungsverfahren und -apparaturen erlaubt und eine große Variationsbreite in Form und stofflicher Zusammensetzung der resultierenden Formkörper ermöglicht.

Eine weitere Aufgabe der vorliegenden Erfindung besteht darin, zwei- oder dreidimensionale Formkörper bereitzustellen, die bei Betrachtung mindestens einer ihrer Oberflächen ein im Inneren des Formkörpers befindliches glänzendes, dreidimensional erscheinendes Muster mit feinen Linienstrukturen zeigen, ohne auf ihrer Oberfläche ein gleichermaßen dreidimensionales Muster aufzuweisen, wobei die Formkörper optional zu einem, erheblichen Anteil aus von Kunststoffen verschiedenem Material bestehen können.

Eine zusätzliche Aufgabe der vorliegenden Erfindung besteht darin, die Verwendung der derart erzeugten Formkörper aufzuzeigen.

Die Aufgabe der vorliegenden Erfindung wird gelöst durch ein Spritzgießverfahren zur Erzeugung von virtuellen dreidimensionalen Mustern in Formkörpern, wobei
- ein Spritzgießwerkzeug bereitgestellt wird, welches voneinander trennbare Spritzgießteilformen A und B aufweist, die jeweils eine innere Oberfläche A' und B' aufweisen und zusammen einen inneren Hohlraum bilden, und wobei bei geöffnetem Spritzgießwerkzeug
- ein Vorformling, welcher eine zwei- oder dreidimensionale Gestalt und eine äußere Oberfläche aufweist, auf der inneren Oberfläche A' der Spritzgießteilform A derart befestigt wird, dass die äußere Oberfläche des Vorformlings dem Hohlraum zugewandt ist, wobei diese äußere Oberfläche zumindest auf einer Teilfläche davon Erhebungen und/oder Vertiefungen aufweist, die zusammen ein dreidimensionales Muster bilden,
- eine thermoplastische Folie, die mit plättchenförmigen Effektpigmenten pigmentiert ist, in den inneren Hohlraum eingebracht wird,
- das Spritzgießwerkzeug geschlossen wird,
- eine transparente thermoplastische Kunststoffschmelze in den inneren Hohlraum zwischen der thermoplastischen Folie und der Oberfläche B' der Spritzgießteilform B eingetragen wird, wobei die thermoplastische Folie mit zumindest dem Teil der äußeren Oberfläche des Vörformlings, der das dreidimensionale Muster aufweist, sowie gleichzeitig mit der thermoplastischen Kunststoffschmelze eine haftfeste und formschlüssige Verbindung eingeht,
   und
- wobei die plättchenförmigen Effektpigmente das auf der äußeren Oberfläche des Vorformlings befindliche dreidimensionale Muster auf oder in der thermoplastischen Folie replizieren und optisch verstärken,
- das Spritzgießwerkzeug temperiert oder gekühlt und nachfolgend
- der resultierende Formkörper, welcher eine äußere Oberfläche aus transparentem, thermoplastischem Kunststoff aufweist und auf mindestens einem Teil dieser äußeren Oberfläche ein virtuelles, durch die plättchenförmigen Effektpigmente gebildetes dreidimensionales Muster zeigt, entformt oder entnommen wird.

Des Weiteren wird die Aufgabe der Erfindung gelöst durch einen Formkörper, welcher wenigstens aus einem Vorformling, einer sich auf dem Vorformling befindenden Zwischenschicht aus einem thermoplastischen Kunststoff, die mit plättchenförmigen Effektpigmenten pigmentiert ist, und einer äußeren Oberflächenschicht aus einem transparenten thermoplastischen Kunststoff besteht, wobei die äußere Oberflächenschicht auf mindestens einer Teilfläche davon ein optisch wahrnehmbares, im Inneren des Formkörpers von den plättchenförmigen Effektpigmenten gebildetes, virtuelles dreidimensionales Muster zeigt, und wobei die äußere Oberflächenschicht des Formkörpers selbst kein entsprechendes räumliches dreidimensionales Muster aufweist.

Darüber hinaus wird die Aufgabe der Erfindung auch gelöst durch die Verwendung des vorab beschriebenen Formkörpers als dekoratives und/oder kennzeichnendes Element oder Teil von Gebrauchsgütern.

Gegenstand der vorliegenden Erfindung ist daher ein Spritzgießverfahren zur Herstellung eines zwei- oder dreidimensional geformten Formkörpers, bei dem mindestens auf einem Teil seiner äußeren Oberfläche ein glänzendes, dreidimensional erscheinendes Muster sichtbar ist, welches auf diesem Teil der Oberfläche nicht in gleicher Weise räumlich dreidimensional vorhanden ist, d.h. ein virtuelles dreidimensionales Muster darstellt.

Das erfindungsgemäße Spritzgießverfahren entspricht im Wesentlichen einem üblichen Spritzgießverfahren, bei dem eine teilbare Spritzgießform eingesetzt wird, deren innerer Hohlraum der endgültigen Form des herzustellenden Formkörpers entspricht. In diesen Hohlraum wird eine Kunststoffschmelze eingetragen und anschließend verfestigen gelassen. Anschließend wird der erzeugte Formkörper aus der geöffneten Spritzgießform entformt oder dieser entnommen.

Für das erfindungsgemäße Verfahren wird die übliche Spritzgießform so modifiziert, dass sie in einer der Spritzgießteilformen (Spritzgießteilform A) einen Einsatz oder eine andere Vorrichtung aufweist, der oder die einen Vorformling aufnehmen kann. Dieser Vorformling kann zwei- oder dreidimensional ausgebildet sein, wobei im Sinne der vorliegenden Erfindung flächige Gebilde wie beispielsweise Folien oder Platten als zweidimensional betrachtet werden sollen, während andere räumliche Gebilde, die nicht planar ausgebildet sind, als dreidimensional gelten sollen. Dabei gelten für dreidimensionale Vorformlinge keine Beschränkungen in der Form, solange die Spritzgießform die entsprechenden Vorformlinge aufnehmen kann und diese an, in oder auf der inneren Oberfläche A' der Spritzgießteilform A befestigt werden können.

Der Vorformling wird dabei derart an der inneren Oberfläche A' befestigt, dass seine äußere Oberfläche dem Hohlraum der Spritzgießform zugewandt ist (unter äußerer Oberfläche des Vorformlings wird erfindungsgemäß verstanden: eine der beiden Hauptflächen einer Folie oder Platte, die nach außen gewölbte Oberfläche oder Teilflächen davon bei dreidimensionalen Hohlkörpern oder mindestens ein Teil der gesamten äußeren Oberfläche bei dreidimensional geformten Körpern mit geschlossener Oberfläche).

Als innere Oberfläche des Vorformlings wird dagegen im Rahmen der vorliegenden Erfindung der Teil der gesamten Oberfläche des Vorformlings verstanden, der nicht die äußere Oberfläche des Vorformlings bildet, also die Hauptfläche einer Folie oder Platte, die nicht dem Hohlraum der Spritzgießform, sondern der inneren Oberfläche A' zugewandt ist, oder die innere Oberfläche eines dreidimensionalen Hohlkörpers oder der Teil der äußeren Oberfläche eines dreidimensionalen Körpers mit geschlossener Oberfläche, der der inneren Oberfläche A' der Spritzgießform zugewandt ist.

Die innere Oberfläche des Vorformlings kann je nach den technischen Erfordernissen und dem Einsatzzweck des resultierenden Formkörpers frei gestaltet und beispielsweise mit Rastnasen, Rippen oder Verstärkungsstreben versehen werden. Sie ist der inneren Oberfläche A' der Spritzgießform zugewandt und wird an dieser befestigt.

Bei dem Vorformling kann es sich um einen polymeren Vorformling, welcher weitestgehend aus Kunststoff besteht, aber auch um einen Vorformling handeln, welcher zu einem überwiegenden Teil aus einem von Kunststoff verschiedenen Material besteht.

Polymere Vorformlinge können als polymere Komponente verschiedene thermoplastische Kunststoffe, beispielsweise Polystyrol (PS). Polypropylen (PP), Polycarbonat (PC), Polymethylmethacrylat (PMMA), Styrol-Acrylnitril (SAN), verschiedene thermoplastische Elastomere (TPEs) oder Acrylnitril-Butadien-Styrol (ABS), um nur einige zu nennen, enthalten. Es können auch noch weitere, von den vorab genannten verschiedene Co-Polymerisate eingesetzt werden, die die oben genannten Polymere enthalten. Darüber hinaus können polymere Vorformlinge als Polymerbestandteil auch verschiedene duroplastische Kunststoffe, wie beispielsweise Melamin/Phenolharze (MP/MF), Melamin/Polyesterharze (MPV), ungesättigte Polyesterharze (UP) oder Phenolharze (PF) enthalten. Auch verschiedene Kautschuke oder Silikone kommen als Polymerbestandteil der polymeren Vorformlinge in Frage.

Weitere Inhaltsstoffe sind optional Additive und Hilfsstoffe, die die mechanische Festigkeit, die funktionellen Eigenschaften oder die optischen Eigenschaften der Vorformlinge beeinflussen können, beispielsweise verstärkende Glas- oder Kohlefasern, Ruße, leitfähige Zusatzstoffe, partikuläre Füllstoffe und/oder anorganische oder organische Farbmittel sowie weitere Hilfs- und Zusatzstoffe.
Die polymeren Vorformlinge sind transparent, semitransparent oder opak ausgebildet und können sowohl farblos als auch farbig, insbesondere auch grau oder schwarz eingefärbt, vorliegen.

Vorformlinge, die im Wesentlichen aus von Kunststoff verschiedenen Materialien bestehen, sind beispielsweise Vorformlinge aus Metallen oder Keramik. Diese können, aber müssen nicht durch ein Spritzgießverfahren hergestellt sein. Als Metalle kommen insbesondere Aluminium, Stahl, Zink oder auch Kupferlegierungen in Betracht. Vorformlinge aus Keramik können aus sinterfähigen Keramikmaterialien hergestellt sein. Von diesen sind Vorformlinge aus Metall bevorzugt.

Der Vorformling weist dabei mindestens auf einer Teilfläche seiner äußeren Oberfläche, wahlweise auch auf der gesamten äußeren Oberfläche, Erhebungen und/oder Vertiefungen auf, die zusammen ein dreidimensionales Muster bilden. Dieses Muster ist vorzugsweise makroskopisch sichtbar und liegt beispielsweise in Form eines figürlichen Objektes, eines alphanumerischen Motivs, eines Strich- und/oder Punktmusters, eines Logos, einer Codierung oder eines Fantasiemusters vor.

Dabei ist es im Rahmen der vorliegenden Erfindung von Bedeutung, dass das dreidimensionale Muster auf der äußeren Oberfläche des Vorformlings nicht mit der äußeren Form des Vorformlings übereinstimmt, das heißt, dass die das Muster bildenden Erhebungen und/oder Vertiefungen auf der Oberfläche des Vorformlings nicht dessen äußere Form bilden, sondern zusätzlich zu möglichen, die Außenform bestimmenden, Erhebungen und/oder Vertiefungen auf der äußeren Oberfläche des Vorformlings vorhanden sind und eindeutig als Textur der äußeren Oberfläche erkennbar sind. So stellt beispielsweise bei einem Vorformling, der die äußere Form einer Halbkugel, die sich auf einer ebenen Platte befindet, aufweist, nicht die halbkugelförmige Erhebung auf dem Plattengrundkörper das Muster gemäß der vorliegenden Erfindung dar, obwohl es sich hier ebenfalls um eine Erhebung auf der äußeren Oberfläche handelt, sondern beispielsweise ein dreidimensional geprägtes Logo auf der Halbkugel oder dem Plattengrundkörper.

Das dreidimensionale Muster auf der äußeren Oberfläche des Vorformlings weist erfindungsgemäß Erhebungen und/oder Vertiefungen auf, die eine Höhe/Tiefe ab etwa 2 µm bis zu einigen Zentimetern und Linienbreiten von 50 µm bis 2000 µm aufweisen können. Vorzugsweise beträgt die Höhe/Tiefe der Erhebungen/Vertiefungen 10 µm bis 50 mm, insbesondere von 10 µm bis 500 µm, und die Linienbreiten liegen bevorzugt im Bereich von 100 µm bis 1000 µm. Die flächenmäßige Ausdehnung des dreidimensionalen Musters kann von wenigen Quadratmillimetern bis zu einigen hundert Quadratzentimetern reichen. Dabei richten sich diese Maße im Wesentlichen nach der Größe und Wanddicke des Vorformlings sowie nach der Funktion, die das später erzeugte virtuelle dreidimensionale Muster im resultierenden Formkörper erfüllen soll und können entsprechend angepasst werden.

Das dreidimensionale Muster, welches durch Erhebungen und/oder Vertiefungen auf der äußeren Oberfläche des Vorformlings gebildet wird, kann auf verschiedene Weise erhalten werden. Handelt es sich bei dem Vorformling um einen polymeren Vorformling aus Kunststoff, kann beispielsweise der Vorformling gleichzeitig mit dem dreidimensionalen Musters auf seiner äußeren Oberfläche in einem Spritzgußverfahren hergestellt werden oder das dreidimensionale Muster auf der Oberfläche eines vorgefertigten polymeren Vorformlings kann durch Lasergravur erhalten werden, um einige Beispiele zu nennen.

Besteht der Vorformling aus einem von Kunststoff verschiedenen Material, vorzugsweise aus Metall, kann das dreidimensionale Muster auf seiner Oberfläche beispielsweise gleichzeitig mit der Herstellung des Vorformlings durch Gießen oder Spritzgießen, aber auch durch Stanzen oder andere materialabtragende Zerspanungsverfahren auf der Oberfläche des Metallvorformlings hergestellt werden.

Für das erfindungsgemäße Verfahren ist es unerheblich, auf weiche Weise der Vorformling einschließlich des sich auf seiner äußeren Oberfläche befindlichen dreidimensionalen Musters hergestellt wird. Bei dem dreidimensionalen Muster soll es sich gemäß der vorliegenden Erfindung aber um ein vorzugsweise haptisch wahrnehmbares Muster aus Erhebungen und/oder Vertiefungen auf der Oberfläche des Vorformlings handeln, die nicht die äußere Form des Vorformlings bestimmen und eindeutig als Textur auf dessen äußerer Oberfläche erkennbar sind.

Falls lediglich eine Teilfläche der äußeren Oberfläche des Vorformlings dem Hohlraum der Spritzgießform zugewandt angeordnet ist ist es gemäß der vorliegenden Erfindung selbstverständlich, dass sich das dreidimensionale Muster aus Erhebungen und/oder Vertiefungen auf genau dieser Teilfläche der äußeren Oberfläche der Vorformlings befindet.

Nachdem der Vorformling auf der Oberfläche A' der Spritzgießteilform A befestigt ist, wird eine transparente thermoplastische Folie, die mit plättchenförmigen Effektpigmenten pigmentiert ist, in den inneren Hohlraum der Spritzgießform eingebracht und dort optional fixiert. Die transparente thermoplastische Folie kann dabei entweder in die Spritzgießteilform A oder die Spritzgießteilform B eingebracht werden. Eine temporäre Fixierung der Folie kann beispielsweise über das Anlegen eines Vakuums, über punktuelle, unter erhöhter Temperatureinwirkung leicht lösbare Klebestellen oder andere geeignete, temporäre Fixiermaßnahmen wie beispielsweise Klammern oder Rahmen erfolgen.

Als polymeres Kunststoffmaterial für die thermoplastische Folie kommen die üblichen thermoplastischen Kunststoffmaterialien in Frage, wie beispielsweise Polystyrol (PS), Polypropylen (PP), Polycarbonat (PC), Polymethylmethacrylat (PMMA), Styrol-Acrylnitril (SAN), verschiedene thermoplastische Elastomere (TPEs) oder Acrylnitril-Butadien-Styrol (ABS), um nur einige zu nennen. Es können auch noch weitere Co-Polymerisate, die verschieden sind von den vorab genannten CoPolymerisaten und die oben genannten Polymere enthalten, eingesetzt werden.

Die aus den thermoplastischen Kunststoffmaterialien geformten Folien sind erfindungsgemäß mit plättchenförmigen Effektpigmenten pigmentiert. Dabei können die plättchenförmigen Effektpigmente auf verschiedene Weise in die thermoplastische Folie ein- oder auf diese aufgebracht werden. So können die plättchenförmigen Effektpigmente als Bestandteil einer Druckfarbe oder einer Beschichtungszusammensetzung auf eine Oberfläche der thermoplastischen Folie voll- oder teilflächig aufgebracht werden, sie können jedoch auch, sofern es sich um Metalleffektpigmente handelt, mit Hilfe eines Verdampfungsverfahrens auf die Oberfläche der Folie aufgebracht werden. Vorzugsweise erfolgt jeweils eine vollflächige Beschichtung. Die für die verschiedenen Beschichtungsverfahren nötigen Verfahrensschritte und Materialien sind dem Fachmann geläufig und müssen hier nicht genauer beschrieben werden.

Ganz besonders bevorzugt erfolgt das Pigmentieren der thermoplastischen Folie jedoch über die Masseeinfärbung der Folie. Das bedeutet, dass bereits bei der Folienherstellung den polymeren Kunststoffen plättchenförmige Effektpigmente in geeigneter Form und Menge zugegeben werden, die zusammen mit den Kunststoffen zu Folien verarbeitet werden, was in der Regel durch Extrusion geschieht. Dies kann durch direkte Zugabe von plättchenförmigen Effektpigmenten zu Kunststoffgranulaten oder auch durch die Herstellung von Effektpigmenthaltigen Compounds oder durch Masterbatches mit anschließendem gemeinsamen Granulieren erfolgen.

Es ist auch die kombinierte Pigmentierung der Folie mit Hilfe einer Masseeinfärbung und einem zusätzlichen Bedruckungs- oder Beschichtungsverfahren möglich.

Die erfindungsgemäß eingesetzte pigmentierte thermoplastische Kunststofffolie enthält die plättchenförmigen Effektpigmente in einer Menge von 0,1 bis 20 Gew.-%, bezogen auf das Gesamtgewicht der pigmentierten Folie. Dabei sind Anteile von 0,5 bis 5 Gew.-% besonders bevorzugt. Alle Pigmentanteile beziehen sich dabei auf die pigmentierte Folie, d.h. auf die beschichtete, bedruckte oder masseeingefärbte Folie. Zusätzlich zu den plättchenförmigen Effektpigmenten kann die pigmentierte thermoplastische Folie noch weitere anorganische oder organische Farbpigmente, Farbstoffe und/oder Füllmittel enthärten. Dabei kommen die üblichen, allgemein für die Einfärbung von Kunststofffolien oder Druckfarben bzw. Beschichtungszusammensetzungen eingesetzten Farbmittel und Füllstoffe in Betracht, solange sie die optischen Effekte, die durch die plättchenförmigen Effektpigmente erzielt werden, nicht nachhaltig behindern. Für bestimmte Polymere, beispielsweise PET, sind organische Farbstoffe bevorzugt, die in der polymeren Kunststoffmasse löslich sind und die resultierenden Folien gleichmäßig einfärben, ohne einen störenden partikulären Charakter aufzuweisen. Andere Polymerfolien bzw. Bindemittel lassen sich auch mit organischen oder anorganischen Farbpigmenten oder Füllstoffen in Partikelform versehen.

Als plättchenförmige Effektpigmente im Verfahren gemäß der vorliegenden Erfindung können alle bekannten plättchenförmigen Effektpigmente eingesetzt werden, solange diese in oder auf der thermoplastischen Folie sichtbar sind. Solche plättchenförmigen Effektpigmente werden vorteilhafterweise ausgewählt aus der Gruppe Perlglanzpigmente, Interferenzpigmente, Metalleffektpigmente, plättchenförmige funktionelle Pigmente, plättchenförmige strukturierte Pigmente, oder einem Gemisch aus diesen. Diese Effektpigmente sind aus einer oder mehreren Schichten aus voneinander unterschiedlichen Materialien aufgebaut und liegen plättchenförmig vor.

Bevorzugt weisen diese Pigmente ein plättchenförmiges Substrat auf, auf welchem sich eine oder mehrere Schichten befinden, wobei sich zumindest das Substrat und die sich direkt auf dem Substrat befindliche Schicht und/oder mindestens zwei jeweils benachbarte Schichten der Beschichtung untereinander in ihren Brechzahlen n mindestens um den Wert Δn=0,1 unterscheiden. Bei den sich auf dem Substrat befindlichen Schichten handelt es sich dabei vorzugsweise um Metalle, Metalloxide, Metalloxidhydrate oder deren Gemische, Metallmischoxide, -suboxide, - oxinitride, Metallfluoride oder Polymermaterialien.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCI-Pigmente oder Fischsilberpigmente prinzipiell geeignet sind, werden als Effektpigmente im Sinne der Erfindung vorzugsweise plättchenförmige Interferenzpigmente oder Metalleffektpigmente eingesetzt, welche auf einem plättchenförmigen Substrat mindestens eine Beschichtung aus einem Metall, Metalloxid, Metalloxidhydrat oder deren Gemischen, einem Metallmischoxid, Metallsuboxid, Metalloxinitrid, Metallfluorid oder einem Polymer aufweisen.

Die Metalleffektpigmente weisen bevorzugt mindestens ein Metallsubstrat oder eine Metallschicht auf.

Das plättchenförmige Substrat besteht vorzugsweise aus natürlichem oder synthetischem Glimmer, Kaolin oder einem anderen Schichtsilikat, aus Glas, Calcium-Aluminium-Borosilikat, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metalllegierungen.

Besonders bevorzugt sind plättchenförmige Substrate aus Glimmer, Glas, Calcium-Aluminium-Borosilikat, Graphit, SiO₂, Al₂O₃, oder aus Aluminium.

Die Größe der plättchenförmigen Substrate ist an sich nicht kritisch, jedoch müssen die plättchenförmigen Effektpigmente in oder auf der thermoplastischen Folie sichtbar sein und sich mit oder in der Folie orientieren lassen. Die Substrate weisen in der Regel eine Dicke zwischen 0,01 und 5 µm, insbesondere zwischen 0,05 und 4,5 µm und besonders bevorzugt von 0,1 bis 1 µm auf. Die Ausdehnung in der Länge bzw. Breite beträgt üblicherweise von 5 bis 250 µm, vorzugsweise von 5 bis 100 µm und insbesondere von 5 bis 125 µm. Sie besitzen in der Regel ein Aspektverhältnis (Verhältnis des mittleren Durchmessers zur mittleren Teilchendicke) von mindestens 2:1, vorzugsweise von 3:1 bis 500:1 und insbesondere von 6:1 bis 250:1.

Die genannten Maße für die plättchenförmigen Substrate gelten prinzipiell auch für die erfindungsgemäß verwendeten beschichteten Effektpigmente, da die zusätzlichen Beschichtungen in der Regel im Bereich von nur wenigen Hundert Nanometern liegen und damit die Dicke oder Länge bzw. Breite (Teilchengröße) oder Dicke der Pigmente nicht wesentlich beeinflussen.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen.

Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen.
Als Metallfluorid wird bevorzugt MgF₂ eingesetzt.

Besonders bevorzugt sind Effektpigmente, welche ein plättchenförmiges Substrat aus Glimmer, Glas, Calcium-Aluminium-Borosilikat, Graphit, SiO₂, Al₂O₃, oder aus Aluminium und mindestens eine Schicht auf dem Substrat aufweisen, welche aus TiO₂, Titansuboxiden, Titanoxinitriden, Fe₂O₃, Fe₃O₄, SnO₂, Sb₂O₃, SiO₂, Al₂O₃, MgF2, ZrO₂, B₂O₃, Cr₂O₃, ZnO, CuO, NiO oder deren Gemischen ausgewählt ist.

Die Effektpigmente können einen Mehrschichtaufbau aufweisen, bei dem sich auf einem metallischen oder nichtmetallischen Träger mehrere Schichten übereinander befinden, die vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 voneinander unterscheiden. Dabei können die auf dem Träger befindlichen Schichten sowohl farblos als auch farbig, überwiegend transparent, semitransparent oder auch opak sein.

Je nach verwendetem Substratmaterial und Art der aufgebrachten Schichten sind damit auch die erhaltenen Effektpigmente farblos oder weisen eine Körperfarbe auf, bzw. sind überwiegend transparent, semitransparent oder opak. Durch das Ein- oder Mehrschichtsystem auf dem Substrat sind sie aber zusätzlich in der Lage, mehr oder weniger intensive und glänzende Interferenzfarben zu erzeugen.
Bevorzugt werden plättchenförmige Effektpigmente eingesetzt, die aus überwiegend transparenten Materialien bestehen und Interferenzeffekte aufweisen oder auch Metallpigmente, insbesondere Aluminiumpigmente, die mit Interferenzschichten beschichtet sind.

Es können jedoch auch als holographische Pigmente bezeichnete Polymerplättchen oder reine Metallplättcheri als plättchenförmige Effektpigmente eingesetzt werden. Darüber hinaus können auch plättchenförmige Effektpigmente eingesetzt werden, deren Materialauswahl in Substrat oder Beschichtung zusätzlich zu magnetischen, elektrisch leitfähigen, fluoreszierenden oder anderen funktionellen Eigenschaften der entsprechenden Effektpigmente führt.

Die vorab beschriebenen Effektpigmente können in der erfindungsgemäß eingesetzten pigmentierten thermoplastischen Folie einzeln oder als Gemisch von zwei oder mehreren vorhanden sein.

Als Effektpigmente können beispielsweise die im Handel erhältlichen funktionellen Pigmente, Interferenzpigmente oder Perlglanzpigmente, welche unter den Bezeichnungen Iriodin®, Colorstream®, Xirallic®, Miraval®, Ronastar®, Biflair®, Minatec®, Lustrepak®, Colorcrypt®, Colorcode® und Securalic® von der Firma Merck KGaA angeboten werden, Mearlin® der Firma Mearl, Metalleffektpigmente der Firma Eckart sowie optisch variable Effektpigmente wie beispielsweise Variochrom® der Firma BASF, Chromafflair® der Firma Flex Products Inc., Helicone® der Firma Wacker, holographische Pigmente der Firma Spectratec sowie andere kommerziell erhältliche Effektpigmente eingesetzt werden.

Die geometrische Dicke der erfindungsgemäß eingesetzten pigmentierten thermoplastischen Folie kann in einem breiten Bereich variieren und liegt vorzugsweise im Bereich von 20 bis 2000 µm, insbesondere von 50 bis 1000 µm. Diese Angaben beziehen sich sowohl auf bedruckte/beschichtete als auch auf masseeingefärbte Folien.

Nachdem der Vorformling und die mit den plättchenförmigen Effektpigmenten pigmentierte thermoplastische Folie in den inneren Hohlraum der Spritzgießform eingebracht sind, wird das Spritzgießwerkzeug geschlossen und eine transparente thermoplastische Kunststoffschmelze in den verbleibenden Hohlraum der Spritzgießform zwischen der thermoplastischen Folie und der Oberfläche B' der Spritzgießteilform B eingetragen. Dabei stellt die Spritzgießteilform A mit der inneren Oberfläche A' die Auswerferseite und die Spritzgießteilform B mit der inneren Oberfläche B' die Düsenseite der Spritzgießform dar. Nach dem Eintragen der Kunststoffschmelze in den Hohlraum wird dieser von der Kunststoffschmelze vollständig ausgefüllt. Das Eintragen der transparenten Kunststoffschmelze in den Hohlraum der Spritzgießform erfolgt vorzugsweise bei erhöhtem Druck und erhöhter Temperatur, jeweils abhängig von den verwendeten Materialien. Die Temperatur der Kunststoffschmelze liegt dabei mindestens so hoch wie die Glasübergangstemperatur T_{G} des Kunststoffanteils der thermoplastischen Folie und bevorzugt darüber. Durch die Einwirkung der heißen Kunststoffschmelze und den Druck, den die geschmolzene transparente Kunststoffmasse während des Einbringens in den Hohlraum der Spritzgießform auf die pigmentierte thermoplastische Folie ausübt, erreicht die thermoplastische Folie eine Temperatur, die eine mechanische Verformung der Folie zulässt. Die konkrete Arbeitstemperatur hängt jeweils von den verarbeiteten Kunststoffen ab und liegt gewöhnlich im Bereich von 120°C bis 400°C, vorzugsweise von 200°C bis 280°C. Auch der im Verfahren während des Eintragens der thermoplastischen Kunststoffschmelze in den Hohlraum der Spritzgießform eingesetzte Druck ist jeweils maschinen- und materialabhängig und liegt üblicherweise im Bereich von 100 bis 2500 bar (1x10⁷ N/m² bis 2,5x10⁸ N/m²).

Als Material für die thermoplastische Kunststoffschmelze kommen die üblicherweise für Spritzgießverfahren verwendeten Kunststoffe wie PS, PC, SAN, ASA, TPO, PMMA, TPE, ABS, ABS/PC-Mischungen, PA oder PP, jeweils einzeln oder in kompatibler Kombination miteinander, zur Anwendung. Sie können in farbloser oder kolorierter Form eingesetzt werden und ergeben nach dem Erstarren transparente Kunststoffschichten.

Während des Eintragens der transparenten thermoplastischen Kunststoffschmelze in das Spritzgießwerkzeug erwärmt sich die thermoplastische Folie soweit, dass sie mechanisch verformbar wird und sich formschlüssig an die äußere Oberfläche des Vorformlings, die dem inneren Hohlraum der Spritzgießform zugewandt ist, anschmiegen kann. Je nach Größe und Form der thermoplastischen Folie verbindet sich dabei die thermoplastische Folie ganz oder teilweise mit zumindest einem Teil der äußeren Oberfläche des Vorformlings, insbesondere mit dem Teil dieser äußeren Oberfläche, der das dreidimensionale Muster aufweist. Gleichzeitig findet auch mit der eingetragenen thermoplastischen Kunststoffschmelze eine Verbindung statt. Sowohl im Hinblick auf den Vorformling als auch im Hinblick auf die thermoplastische Kunststoffschmelze handelt es sich dabei um eine haftfeste und formschlüssige Verbindung der thermoplastischen Folie, so dass diese im Inneren des resultierenden Formkörpers fest eingeschlossen vorliegt.

Das auf der äußeren Oberfläche des Vorformlings vorhandene dreidimensionale Muster wird als Negativ auf der Oberfläche der Folie repliziert, die dieser äußeren Oberfläche des Vorformlings zugewandt ist. Da das polymere thermoplastische Material der Folie erweicht, wird die Folie zumindest an ihrer, der äußeren Oberfläche des Vorformlings zugewandten Oberfläche an den Flächeneinheiten, die mit dem dort befindlichen dreidimensionalen Muster Kontakt haben, ebenfalls dreidimensional verformt. Diese thermische Verformung der Folie kann sich über den gesamten Querschnitt der thermoplastischen Folie fortsetzen, kann aber auch lediglich an deren Kontaktfläche mit dem Vorformling erfolgen, so dass die der thermoplastischenKunststoffschmelze zugewandte Oberfläche der Folie dreidimensional unverformt bleibt, d.h. das dreidimensionale Positiv des dreidimensionalen Musters nicht aufweist (welches, wie bereits beschrieben, unabhängig ist von der äußeren Formgebung des Vorformlings, die die Folie selbstverständlich identisch widerspiegelt, da sie nach der thermischen Behandlung am Vorformling anhaftet). Das Erweichen des polymeren Folienmaterials ermöglicht gleichzeitig eine erneute Beweglichkeit der in oder auf der thermoplastischen Folie vorhandenen plättchenförmigen Effektpigmente. Diese liegen in oder auf der thermoplastischen, aber thermisch noch unbehandelten Folie üblicherweise in überwiegend gerichteter Form, und zwar mit ihrer Hauptachse weitestgehend parallel zur Folienoberfläche hin ausgerichtet, vor. Diese Ausrichtung kann durch das bevorzugt eingesetzte Extrusionsverfahren mit daraus folgender Masseeinfärbung der Folie oder auch durch verschiedene Beschichtungsverfahren, bei denen die Folie mit Effektpigment-haltigen Beschichtungszusammensetzungen beschichtet oder bedruckt wird, erhalten werden, da die mit diesen Verfahren ausgeübten Zug- und Scherkräfte automatisch zu einer Parallelausrichtung plättchenförmiger Effektpigmente führen. Die über die thermische Behandlung im Spritzgießwerkzeug erzielte Beweglichkeit der plättchenförmigen Effektpigmente führt zu einer Neuorientierung der Längsachsen der Effektpigmente an den Erhebungen und/oder Vertiefungen, die das von der Oberfläche des Vorformlings übertragene dreidimensionale Muster in der dem Vorformling zugewandten Oberfläche der Folie bildet. An den Kanten dieser Erhebungen und/oder Vertiefungen werden die plättchenförmigen Effektpigmente aus ihrer parallelen Orientierung gelenkt und verbleiben in der thermoplastischen polymeren Masse der Folie in einer in Bezug auf die Folienoberfläche geneigten Ausrichtung in einem spitzen oder steilen Winkel. Dadurch ändert sich das Reflexionsverhalten der plättchenförmigen Effektpigmente an diesen Stellen der Folie, was in einem steilen Betrachtungswinkel zu einer in der Regel verminderten Reflexion im Vergleich zu den ebenen Flächenarealen führt. Auf diese Weise replizieren die plättchenförmigen Effektpigmente in oder auf der thermoplastischen Folie das dreidimensionale Muster auf der äußeren Oberfläche des Vorformlings und verstärken es optisch durch ihr daran angepasstes Reflexionsverhalten.

Gleichzeitig fließt die heiße Kunststoffschmelze in den Hohlraum zwischen der thermoplastischen Folie und der inneren Oberfläche B' und "übergießt" das durch Reflexion der plättchenförmigen Effektpigmente sichtbare dreidimensionale Muster, welches, von der äußeren, nicht mit dem Vorformling verbundenen Oberfläche der Folie aus betrachtet, in seiner Ansicht identisch ist mit dem realen dreidimensionalen Muster auf der äußeren Oberfläche des Vorformlings, durch die von den Pigmenten ausgehenden Lichtreflexe jedoch deutlicher und optisch attraktiver wahrgenommen werden kann. Beim nachfolgenden Aushärten des so entstandenen Formkörpers entsteht eine haftfeste, formschlüssige Verbindung zwischen der mit plättchenförmigen Effektpigmenten pigmentierten thermoplastischen Folie sowie dem Vorformling einerseits und dem transparenten Kunststoff, der aus der transparenten thermoplastischen Kunststoffschmelze gebildet wird, andererseits, die im nachfolgenden Abkühlungs- bzw. Temperiervorgang manifestiert wird. Die Umorientierung der Effektpigmente wird während des Erstarrungsprozesses der thermoplastischen Kunststoffschmelze fixiert. Dabei kann mit masseeingefärbten thermoplastischen Folien eine deutlicher sichtbare Umorientierung der plättchenförmigen Effektpigmente erzielt werden als mit bedruckten bzw. beschichteten Folien, zumal hier mit einer Beschädigung der Oberfläche während des Umformens nicht gerechnet werden muss.

Die äußere Schicht aus transparentem Kunststoff, die die äußere Oberfläche des resultierenden Formkörpers bildet, verstärkt zusätzlich das im Inneren des Formkörpers erhaltene virtuelle dreidimensionale Muster aus plättchenförmigen Effektpigmenten durch einen zusätzlichen optischen Tiefeneffekt.

Ist der Formkörper ausreichend ausgehärtet, kann er entformt oder dem Spritzgießwerkzeug entnommen werden.

Der resultierende Formkörper weist eine äußere Form auf, die durch die Form des Vorformling einerseits und durch die Form der inneren Oberfläche B' des Spritzgießwerkzeugs andererseits bestimmt wird. Von der Seite des transparenten polymeren Kunststoffs aus betrachtet (d.h. der äußeren Oberfläche des Formkörpers), bei der es sich in der Regel um die "Sichtseite" des erhaltenen Formkörpers handelt, zeigt der Formkörper gemäß der vorliegenden Erfindung in seinem Inneren ein virtuelles, in der Tiefe liegendes, glänzendes, dreidimensionales Muster, welches aus plättchenförmigen Effektpigmenten gebildet wird. Sofern es sich bei der Oberfläche B' der Spritzgießteilform B um eine üblicherweise eingesetzte polierte Oberfläche handelt, weist der resultierende polymere Formkörper an seiner äußeren Oberfläche (Sichtseite) keine dreidimensionale Gestalt auf, die dem im Inneren des Formkörpers sichtbaren dreidimensionalen Effektpigment-Muster entspricht. Gleichwohl kann aber die Oberfläche B' des Spritzgießwerkzeugs ebenfalls eine grobe oder feine Textur aufweisen, die beim resultierenden Formkörper zu einer groben oder feinen Struktur auf seiner äußeren Oberfläche führt, die das im Inneren des Formkörpers sichtbare dreidimensionale Muster zusätzlich dreidimensional verstärkt oder ergänzt.

Die Farbgebung, Funktionalität und das Glanzverhalten des virtuellen dreidimensionalen Musters entspricht dabei der Farbgebung, Funktionalität und dem Glanzverhalten der pigmentierten thermoplastischen Folie. Farbgebung, Funktionalität und Glanzverhalten der thermoplastischen Folie werden von den in oder auf dieser enthaltenen plättchenförmigen Effektpigmenten entscheidend geprägt, gegebenenfalls ergänzt durch zusätzliche Farbmittel und/oder Füllstoffe, die sich noch in oder auf der thermoplastischen Folie befinden.

Glanz und Farbgebung der plättchenförmigen Effektpigmente führen zu einer besonders starken Wahrnehmung des virtuellen dreidimensionalen Musters auf den Oberflächen des hergestellten Formkörpers. Das sichtbare dreidimensionale Muster ist dabei deutlich ausgeprägter als es die reale Verformung der thermoplastischen Folie erwarten ließe, weil eine Auslenkung der plättchenförmigen Effektpigmente aus der parallelen Lage auch um nur wenige Winkelgrade bereits eine deutliche Änderung ihrer Reflexionseigenschaften zur Folge hat. Im jeweiligen Glanzwinkel betrachtet, bleibt der durch die Effektpigmente erzielte Glanz aber über die gesamte Fläche des von der thermoplastischen Folie gebildeten Teils des Formkörpers erhalten.

Dies betrifft insbesondere die äußere Oberflächenschicht des Formkörpers, die aus dem aus der thermoplastischen Kunststoffschmelze resultierenden transparenten thermoplastischen Kunststoff gebildet wird und, wie oben beschrieben, in der Regel die "Sichtseite" des entstehenden Formkörpers darstellt. Ist der Vorformling ebenfalls aus einem transparenten Kunststoff geformt, kann das dreidimensionale Muster gegebenenfalls auch auf dessen innerer Oberfläche zu sehen sein. Eine besonders gute Sichtbarkeit des dreidimensionalen Musters auf der äußeren Oberfläche des resultierenden Formkörpers ergibt sich, wenn der Vorformling opak und/oder vorzugsweise grau oder schwarz gefärbt ist, insbesondere dann, wenn die thermoplastische Folie mit plättchenförmigen Effektpigmenten pigmentiert ist, die vollständig aus transparenten Matrialien bestehen und lediglich Interferenzfarben, aber keine Absorptionsfarbe, aufweisen.

Enthält die transparente thermoplastische Kunststoffschmelze ein lösliches Farbmittel oder geringe Mengen eines partikulären Farbmittels, kann der von der Seite der äußeren Oberfläche des resultierenden Formkörpers aus wahrnehmbare koloristische Eindruck des virtuellen dreidimensionalen Musters noch wunschgemäß modifiziert werden. Lösliche Farbmittel führen zwar zu einer eigenen Farbigkeit der thermoplastischen Kunststoffschmelze und des damit hergestellten Teils des Formkörpers, behindern jedoch die Transparenz dieses Teils des Formkörpers kaum oder gar nicht.

Die transparente thermoplastische Kunststoffschmelze besteht (ggf. neben üblichen Füll- und Hilfsstoffen sowie Farbmittel wie beschrieben) aus thermoplastischen Kunststoffen. Diese können, wie bereits oben bezüglich der thermoplastischen Folien beschrieben, aus üblichen thermoplastischen Kunststoffen bestehen und umfassen dieselben Stoffgruppen wie oben dargelegt.

Vorzugsweise sind die in der thermoplastische Folie und in der thermoplastischen Kunststoffschmelze sowie im Vorformling eingesetzten Kunststoffmaterialien identisch, teilidentisch oder zumindest ähnlich in ihren Schmelztemperaturen und ihrem Schmelzverhalten, um die vollständige stoffliche Verbindung aller polymeren Bestandteile des Formkörpers während des Spritzgießverfahrens zu erleichtern und eine unlösbare, haftfeste und formschlüssige Verbindung zu ermöglichen. Allerdings ist es für die Durchführung des erfindungsgemäßen Verfahrens ausreichend, wenn die Temperatur der transparenten thermoplastischen Kunststoffschmelze mindestens den Wert der Glasübergangstemperatur T_{G} des Kunststoffanteils der pigmentierten thermoplastischen Folie aufweist. Entsprechend dieser Voraussetzung können die Ausgangsstoffe für die thermoplastische Folie und die transparente thermoplastische Schmelze ausgewählt werden.

Die Glasübergangstemperatur T_{G} des Kunststoffanteils eines polymeren Vorformlings sollte dagegen während des Spritzgießverfahrens unterschritten werden, um die mechanische Stabilität des sich auf dessen äußerer Oberfläche befindlichen dreidimensionalen Musters nicht zu gefährden und die exakte Übertragung des dreidimensionalen Musters auf die thermoplastische Folie zu ermöglichen. Es hat sich überraschenderweise herausgestellt, dass diese Voraussetzung im erfindungsgemäßen Verfahren selbst dann erfüllt ist, wenn die für die thermoplastischen Folie und für einen polymeren Vorformling verwendeten Kunststoffe identisch sind, da die thermoplastische Kunststofffolie während des Spritzgießverfahrens gegenüber dem Vorformling als Schutzschicht wirkt und dieser während des Eintragens der thermoplastischen Kunststoffschmelze seine Glasübergangstemperatur nicht erreicht.

Für den Fall, dass die Notwendigkeit besteht, für die mit plättchenförmigen Effektpigmenten pigmentierte thermoplastische Folie und die thermoplastische Kunststoffschmelze Kunststoffmaterialien einzusetzen, die sich in Schmelztemperatur und Schmelzverhalten zu stark unterscheiden bzw. die obigen Bedingungen an Glasübergangstemperatur und Schmelztemperatur nicht erfüllen, kann eine auf der in den Hohlraum der Spritzgießform ragenden Oberfläche der thermoplastischen Folie aufgebrachte haftvermittelnde Schicht bei der thermischen Verbindung von Folie und Schmelze hilfreich sein. Dies gilt auch für eine thermische Nichtkompatibilität der Bindemittelsysteme einer pigmentierten Druckschicht oder Beschichtung auf der thermoplastischen Folie, da sich die Druckschicht oder Beschichtung, sofern vorhanden, vorzugsweise auf der in den Hohlraum der Spritzgießform ragenden Oberfläche der thermoplastischen Folie befinden. Die haftvermittelnde Schicht sorgt für eine unlösbare Verbindung von Folie und Kunststoffschmelze und kann von Fachmann an Hand seines Fachwissens ausgewählt werden.

In ähnlicher Weise kann auch eine haftvermittelnde Schicht zwischen der mit Effektpigmenten pigmentierten thermoplastischen Folie und dem Vorformling vorgesehen sein.

Gegenstand der vorliegenden Erfindung ist auch ein Formkörper, welcher wenigstens aus einem Vorformling, einer sich auf dem Vorformling befindenden Zwischenschicht aus einem thermoplastischen Kunststoff, die mit plättchenförmigen Effektpigmenten pigmentiert ist, und einer äußeren Oberflächenschichf aus einem transparenten thermoplastischen Kunststoff besteht, wobei die äußere Oberflächenschicht auf mindestens einer Teilfläche davon ein optisch wahrnehmbares, im Inneren des Formkörpers von den plättchenförmigen Effektpigmenten gebildetes, virtuelles dreidimensionales Muster zeigt, und wobei die äußere Oberflächenschicht des Formkörpers selbst kein entsprechendes räumliches dreidimensionales Muster aufweist. Solche Formkörper können nach dem oben beschriebenen erfindungsgemäßen Spritzgießverfahren hergestellt werden.

Bei dem Formkörper gemäß der vorliegenden Erfindung handelt es sich um einen polymeren Formkörper oder um einen Verbundformkörper.

Während bei einem polymeren Formkörper der Vorformling ebenfalls weitestgehend aus einem polymeren Material, also aus einem Kunststoff, besteht, ist bei einem Verbundformkörper der Vorformling überwiegend aus einem von Kunststoff verschiedenen Material zusammengesetzt und besteht vorzugsweise aus einem Metall.

Die bei der Herstellung des erfindungsgemäßen Formkörpers verwendete thermoplastische Folie, die mit plättchenförmigen Effektpigmenten pigmentiert ist, bildet im resultierenden Formkörper die oben genannte Zwischenschicht aus einem thermoplastischen Kunststoff, die mit plättchenförmigen Effektpigmenten pigmentiert ist. Aus der transparenten thermoplastischen Kunststoffschmelze wird beim Erstarren die äußere Oberflächenschicht des erfindungsgemäßen Formkörpers aus transparentem thermoplastischen Kunststoff gebildet.

Die stofflichen Zusammensetzungen von Vorformling, thermoplastischer Folie, plättchenförmigen Effektpigmenten und transparentem thermoplastischem Kunststoff sind oben bereits ausführlich beschrieben worden. Auf diese Beschreibung wird hier bezüglich des erfindungsgemäßen Formkörpers ausdrücklich Bezug genommen.

Falls der in der thermoplastischen Folie verwendete Kunststoff bzw. die in einer Druckschicht oder Beschichtung verwendeten Bindemittelsysteme mit dem Schmelzverhalten des transparenten thermoplastischen Kunststoffs, welcher die äußere Oberflächenschicht des erfindungsgemäßen Formkörpers bildet, thermisch nicht kompatibel genug sind um mittels eines einzigen Verfahrensschrittes miteinander haftfest und formschlüssig verbunden werden zu können, weist der erfindungsgemäße Formkörper vorteilhafterweise zwischen der pigmentierten thermoplastischen Folie und dem ausgehärteten, thermoplastischen Kunststoff noch eine haftvermittelnde Schicht auf. Diese besteht aus einem oder mehreren polymeren Kunststoffen und bildet eine unlösbare, haftfeste Verbindung zwischen der thermoplastischen Folie und dem transparenten thermoplastischen Kunststoff. Die Auswahl des geeigneten Materials kann der Fachmann nach dem jeweiligen Erfordernis an Hand seines Fachwissens treffen.

Falls es aus den oben genannten Gründen nötig sein sollte, kann auch eine haftvermittelnde Schicht zwischen der mit den plättchenförmigen Effektpigmenten pigmentierten Folie und dem Vorformling vorgesehen sein. Das kann insbesondere beim Einsatz von metallischen Vorformlingen eine Rolle spielen.

Bei dem auf der äußeren Oberfläche (Sichtseite) des erfindungsgemäßen Formkörpers sichtbaren, virtuellen dreidimensionalen Muster handelt es sich um das Positiv-Abbild der Erhebungen und/oder Vertiefungen, die sich auf der Oberfläche des Vorformlings befinden. Allerdings wird dieses Abbild hauptsächlich durch die unterschiedliche Orientierung von plättchenförmigen Effektpigmenten in oder auf der im Inneren des erfindungsgemäßen Formkörpers befindlichen thermoplastischen Zwischenschicht erzeugt, wogegen das sich auf der Oberfläche des Vorformlings real befindliche dreidimensionale Muster im resultierenden Formkörper lediglich schwach bis gar nicht optisch wahrgenommen werden kann.

Wie bereits vorab beschrieben, kann sich die Größe der vertikalen und horizontalen Ausdehnung des sichtbaren dreidimensionalen Musters auf der äußeren Oberfläche des erfindungsgemäßen Formkörpers in breiten Bereichen bewegen, die je nach Größe des Vorformlings sowie Dicke der thermoplastischen Folie und dem Verwendungszweck des dreidimensionalen Musters auf dem Formkörper (Beispiel: Codierung versus dekorativer Effekt) ausgewählt wird. Dabei stellt die Dicke der thermoplastischen Folie in der Regel die Obergrenze für die Höhe bzw. Tiefe der Erhebungen und/oder Vertiefungen auf der Oberfläche des Vorformlings dar, in Einzelfällen können diese aber auch über die Dicke der thermoplastischen Folie hinausgehen.

Das dreidimensionale Muster auf der äußeren Oberfläche des Vorformlings weist Erhebungen und/oder Vertiefungen ab einer Höhe/Tiefe von etwa 2 µm bis hin zu einigen Zentimetern und Linienbreiten von 50 µm bis 2000 µm auf. Die flächenmäßige Ausdehnung des dreidimensionalen Musters kann sich von wenigen Quadratmillimetern bis zu einigen hundert Quadratzentimetern hin erstrecken und wird, wie die Höhe/Tiefe und Breite der Vertiefungen bzw. Erhebungen, nach den oben genannten Kriterien bemessen.

Die Oberfläche des Vorformlings, die das dreidimensionale Muster aufweist, liegt dabei im Inneren des Formkörpers vor und ist nicht von diesem trennbar.

Ebenso im Inneren des Formkörpers sind plättchenförmige Effektpigmente in einer thermoplastischen Zwischenschicht zwischen dem Vorformling und der äußeren Oberfläche des Formkörpers angeordnet. Auch diese Zwischenschicht ist nicht von den anderen Bestandteilen des Formkörpers trennbar.

Die in der Zwischenschicht angeordneten plättchenförmigen Effektpigmente weisen jeweils eine Längsachse auf, die der längsten Ausdehnung der Pigmente entspricht und liegen mit diesen Längsachsen in der Zwischenschicht in unterschiedlicher Orientierung, relativ zu einer Grundfläche der Zwischenschicht, vor, wie oben bereits beschrieben wurde. Diese unterschiedliche Orientierung der plättchen-förmigen Effektpigmente führt zu einer unterschiedlichen Lichtreflexion der Effektpigmente bei einfallendem Licht und führt zu einem virtuellen, glänzenden, dreidimensional erscheinenden Muster im Inneren des erfindungsgemäßen Formkörpers, welches auf dessen äußerer Oberfläche sichtbar, aber nicht haptisch wahrnehmbar ist.

Vielmehr besteht die äußere Oberflächenschicht des Formkörpers aus einem transparenten thermoplastischen Kunststoff und weist, von der äußeren Formgebung abgesehen, vorzugsweise keinerlei zusätzliche Oberflächenstruktur auf. In Einzelfällen kann eine solche zusätzliche Textur/Struktur der äußeren Oberfläche aber angemessen oder sinnvoll sein.

Im Gegensatz zu der äußeren Oberflächenschicht des Formkörpers kann der Vorformling transparent, transluzent oder opak ausgebildet sein. Von besonderem Vorteil ist es, wenn der Vorformling farblos oder farbig, aber opak ausgebildet ist, insbesondere wenn er grau oder schwarz gefärbt und vorzugsweise zusätzlich opak ausgebildet ist. Dadurch können sich der Kontrast und die Sichtbarkeit des durch die plättchenförmigen Effektpigmente im Inneren des polymeren Formkörpers gebildeten virtuellen, dreidimensionalen Musters erhöhen.

Das auf der äußeren Oberfläche des Formkörpers sichtbare, virtuelle dreidimensionale Muster ist als solches auf dieser Oberfläche nicht haptisch wahrnehmbar und daher gegen mechanische Einflüsse geschützt. Gleichzeitig ist es durch die unterschiedliche Lichtreflexion der plättchenförmigen Effektpigmente gut wahrnehmbar und optisch attraktiv. Die die Oberfläche des Formkörpers bildende transparente Kunststoffschicht verstärkt den Tiefeneindruck und damit die optisch wahrnehmbare Dreidimensionalität des Musters.

Gegenstand der vorliegenden Erfindung ist auch die Verwendung des vorab beschriebenen polymeren Formkörpers als dekoratives und/oder kennzeichnendes Element oder Teil von Gebrauchsgütern.

Im Wesentlichen und bevorzugt handelt es sich bei den Gebrauchsgütern dabei um Verpackungen, Erzeugnisse der Elektro- und Elektronikindustrie, Haushaltsgeräte, Möbel, Bekleidung, Täschnerwaren, Schuhe, Sportartikel oder Fahrzeuge. Prinzipiell sind die erfindungsgemäßen Formkörper jedoch in allen Bereichen einsetzbar, in denen Formkörper, die sich in einem Spritzgießverfahren herstellen lassen und ein gut sichtbares, attraktives dreidimensionales Muster aufweisen, welches gleichzeitig nicht an der Oberfläche tastbar ist, vorteilhaft eingesetzt werden können. Das virtuelle dreidimensionale Muster kann in solchen Gegenständen aus rein gestalterischen, dekorativen Gründen, aber auch zum Zwecke der Produktkennzeichnung mit Chargennummern, Herstellerdaten und dergleichen eingesetzt werden.

Die vorliegende Erfindung stellt ein einfaches und kostengünstiges Spritzgießverfahren zur Verfügung, mit Hilfe dessen Formkörper erzeugt werden können, die auf mindestens einer ihrer Oberflächen ein glänzendes, optisch attraktives, virtuelles dreidimensionales Muster zeigen, das ein in seiner Farbigkeit, seinem Glanz und seiner Funktionalität variabel einstellbares Erscheinungsbild zeigt und feine Linien mit hoher Präzision aufweisen kann. Dabei kann es sich um polymere Formkörper handeln, die weitestgehend aus Kunststoffen zusammengesetzt sind, aber auch um Verbundformkörper, die einen Formkern aus einem von Kunststoffen verschiedenem Material aufweisen. Für viele Anwendungsbereiche von Spritzgussformkörpern, die spezielle Materialien erfordern, wird damit ein Verfahren zu einer Verbesserung deren optischen Erscheinungsbildes geschaffen, das bisher nicht zur Verfügung stand. Des weiteren hat das erfindungsgemäße Verfahren den Vorteil, dass auch bei polymeren Formkörpern zur Erzielung von eindrucksvollen dreidimensionalen Mustern, die auf der räumlichen Ausrichtung plättchenförmiger Effektpigmente beruhen, nicht der gesamte polymere Formkörper mit diesen plättchenförmigen Effektpigmenten pigmentiert sein muss, sondern lediglich ein Teil des Formkörpers, der je nach Bedarf auch verhältnismäßig gering (beispielsweise lediglich 10 Gew.%) sein kann, bezogen auf die Gesamtmasse des polymeren Formkörpers. Das erfindungsgemäße Verfahren kann mit üblichen Spritzgießanlagen durchgeführt werden und ist daher kostengünstig und bedarfsgerecht anpassbar. Mit Hilfe des erfindungsgemäßen Verfahrens lassen sich auf einfache, kostengünstige Weise fließlinienfreie, komplexe Formkörper erzeugen, die eindrucksvoll mit Effektpigmenten gefärbt und bemustert sind. Die erhaltenen erfindungsgemäßen Formkörper sind haltbar und weisen eine in der Regel unverprägte Oberfläche von hoher optischer Attraktivität und ein praktisch zerstörungsfreies dreidimensionales virtuelles Muster mit großer Linienschärfe auf. Sie sind von uniformer Farbigkeit und von hohem Glanz und variabel in vielen technischen und dekorativen Anwendungsfeldern einsetzbar.

Die Erfindung soll nachfolgend an Hand von Beispielen näher erläutert, jedoch nicht auf diese beschränkt werden.

### Beispiel 1:

Eine Kunststoffplatte aus ABS (Terluran® GP-22, Produkt der Firma BASF SE) mit einem Rußanteil von 0,2 Gew. %, bezogen auf das Gewicht des Kunststoffes, einer Größe von 100 x 150 mm und einer Dicke von 10 mm wird in einem vorgelagerten Verfahrensschritt spritzgegossen. Eine der Hauptoberflächen der Kunststoffplatte wird mit Hilfe einer Laservorrichtung (Trumpf, Vectormark compact) durch Laserablation mit einem Logo in einer Größe von etwa 30 x 45 mm versehen. Das Logo weist verschiedene Vertiefungen von etwa je 100 -150 µm Tiefe auf.

Eine mittels eines Spritzgießverfahrens produzierte Folie (SAN Luran® 358N, Produkt der Firma BASF SE) mit einem Gehalt von 1,5 Gew.-% Colorstream® T10-09 Pacific Twinkle (plättchenförmiges Effektpigment auf der Basis von SiO₂-Substraten, Teilchengröße 20-200 µm, Produkt der Merck KGaA) und 0,2 Gew.% PV Echtblau B2G01 (Produkt der Clariant International Ltd.) mit einer Dicke von ca. 800 µm wird in einer Größe von 100x150 mm hergestellt.

Es wird eine Spritzgießmaschine vom Typ Kraus -Maffei CX-130-380 verwendet. Die vorgefertigte Kunststoffplatte wird in einen Werkzeugeinsatz der Größe 100 x 150 mm in der inneren Oberfläche des Spritzgießwerkzeuges eingelegt, so dass die das Logo tragende Oberfläche der Kunststoffplatte dem Hohlraum des Spritzgießwerkzeuges zugewandt ist. Anschließend wird die ebenfalls vorgefertigte, mit Effektpigmenten masseeingefärbte Folie im inneren Hohlraum des Spritzgießwerkzeuges fixiert und das Werkzeug geschlossen.

Nach dem Schließen des Werkzeugs wird eine transparente Kunststoffschmelze (SAN Luran® 358 N, Produkt der BASF SE) in den verbleibenden Hohlraum der Spritzgießform zwischen der pigmentierten thermoplastischen Folie und der nicht mit dem Vorformling versehenen Oberfläche der Spritzgießform (Düsenseite) eingespritzt. Der Einspritzvorgang erfolgt bei einer Temperatur im Bereich von 220 bis 260°C und einem Druck im Bereich von 450 bis 900 bar (4,5x10⁷ N/m² bis 9x10⁷ N/m²).

Nach dem Abkühlungsvorgang und dem Öffnen der Spritzgießform wird eine Kunststoffplatte erhalten, deren eine äußere Oberfläche eine wie hinter Glas liegende, ebenmäßig stark blau glänzende, farblich blau-grün changierende Fläche mit einem darin befindlichen glänzenden, virtuellen dreidimensionalen Muster in Form eines Logos, das von den plättchenförmigen Effektpigmenten in der Folie gebildet wird, zeigt, welches dem Motiv des Logos auf der Oberfläche der vorgefertigten, Ruß enthaltenden Kunststoffplatte entspricht. Die andere Hauptfläche der erhaltenen Kunststoffplatte ist eben, opak und weist eine schwarze Farbgebung auf.

### Beispiel 2:

Ein PP-Vorformling in der äußeren Form einer Verschlusskappe mit einem Außendurchmesser von 47 mm, einer Höhe von 11,5 mm und einer Wandstärke von 0,6 mm (Metocene® HM 648T, Produkt der Firma LyondellBasell, NL) mit einem Rußanteil von 0,2 Gew-%, bezogen auf das Gewicht des Kunststoffes, wird in einem vorgelagerten Verfahrensschritt spritzgegossen. Auf ihrer äußeren Oberfläche (Deckel) weist die Verschlusskappe eine dreidimensionale Zickzackstruktur mit einem Durchmesser von etwa 30 mm auf.

Mittels eines Extrusionsverfahren wird eine pigmentierte Folie mit einer Dicke von 400 µm hergestellt (Metocene® HM 648T, Produkt der Firma LyondellBasell, NL), die einen Gehalt von 2 Gew.-% eines plättchenförmigen Effektpigmentes (Iriodin® 4504, Teilchengröße 5-50 µm, Produkt der Merck KGaA) aufweist. Die Folie wird auf einen Kreis mit einem Durchmesser von 44 mm zugeschnitten.

Es wird eine Spritzgießmaschine vom Typ Arburg Allrounder 320 M verwendet. Der Vorformling wird in einen Werkzeugeinsatz (Außendurchmesser 48,2 mm) in der inneren Oberfläche des Spritzgießwerkzeuges eingelegt, so dass die die Kontur tragende Oberfläche des Vorformlings dem Hohlraum des Spritzgießwerkzeuges zugewandt ist. Anschließend wird die ebenfalls vorgefertigte, mit Effektpigmenten masseeingefärbte Folie im inneren Hohlraum des Spritzgießwerkzeuges fixiert und das Werkzeug geschlossen.

Nach dem Schließen des Werkzeugs wird eine transparente Kunststoffschmelze (PP, Borealis PP RJ901MO) in den verbleibenden Hohlraum der Spritzgießform zwischen der pigmentierten thermoplastischen Folie und der nicht mit dem Vorformling versehenen Oberfläche der Spritzgießform (Düsenseite) eingespritzt. Der Einspritzvorgang erfolgt bei einer Temperatur im Bereich von 180 bis 260°C und einem Druck im Bereich von 300 bis 900 bar.

Nach dem Abkühlungsvorgang und dem Öffnen des Spritzgießwerkzeugs wird eine Verschlusskappe erhalten, deren äußere Oberfläche im Bereich des Deckels eine wie hinter Glas liegende, ebenmäßig glänzende, farblich changierende Fläche mit einem darin befindlichen glänzenden, virtuellen dreidimensionalen Muster in Form einer Zickzackstruktur, das von den plättchenförmigen Effektpigmenten in der Folie gebildet wird, zeigt, welches in der Form dem Motiv des Musters auf der Oberfläche des vorgefertigten Vorformlings entspricht, in, seiner optischen Tiefe und damit dem vermittelten räumlichen Eindruck jedoch deutlich plastischer wirkt als das reale dreidimensionale Muster auf der Oberfläche des Vorformlings. Die innere Oberfläche der erhaltenen Verschlusskappe ist eben, opak und weist eine schwarze Farbgebung auf.

## Patentansprüche

1. Spritzgießverfahren zur Erzeugung von virtuellen dreidimensionalen Mustern in Formkörpern, wobei
- ein Spritzgießwerkzeug bereitgestellt wird, welches voneinander trennbare Spritzgießteilformen A und B aufweist, die jeweils eine innere Oberfläche A' und B' aufweisen und zusammen einen inneren Hohlraum bilden, und wobei bei geöffnetem Spritzgießwerkzeug
- ein Vorformling, welcher eine zwei- oder dreidimensionale Gestalt und eine äußere Oberfläche aufweist, auf der inneren Oberfläche A' der Spritzgießteilform A derart befestigt wird, dass die äußere Oberfläche des Vorformlings dem Hohlraum zugewandt ist, wobei diese äußere Oberfläche zumindest auf einer Teilfläche davon Erhebungen und/oder Vertiefungen aufweist, die zusammen ein dreidimensionales Muster bilden,
- eine thermoplastische Folie, die mit plättchenförmigen Effektpigmenten pigmentiert ist, in den inneren Hohlraum eingebracht wird,
- das Spritzgießwerkzeug geschlossen wird,
- eine transparente thermoplastische Kunststoffschmelze in den inneren Hohlraum zwischen der thermoplastischen Folie und der Oberfläche B' der Spritzgießteilform B eingetragen wird, wobei die thermoplastische Folie mit zumindest dem Teil der äußeren Oberfläche des Vorformlings, der das dreidimensionale Muster aufweist, sowie gleichzeitig mit der thermoplastischen Kunststoffschmelze eine haftfeste und formschlüssige Verbindung eingeht, und
- wobei die plättchenförmigen Effektpigmente das auf der äußeren Oberfläche des Vorformlings befindliche dreidimensionale Muster auf oder in der thermoplastischen Folie replizieren und optisch verstärken,
- das Spritzgießwerkzeug temperiert oder gekühlt und nachfolgend
- der resultierende Formkörper, welcher eine äußere Oberfläche aus einem transparenten, thermoplastischen Kunststoff aufweist und auf mindestens einem Teil dieser äußeren Oberfläche ein virtuelles, durch die plättchenförmigen Effektpigmente gebildetes dreidimensionales Muster zeigt, entformt oder entnommen wird.

2. Verfahren gemäß Anspruch 1, **dadurch gekennzeichnet, dass** es mindestens bei einer Temperatur durchgeführt wird, die bei oder oberhalb der Glasübergangstemperatur T_{G} der thermoplastischen Folie liegt.

3. Verfahren gemäß Anspruch 1 oder 2, **dadurch gekennzeichnet, dass** die thermoplastische Folie mit plättchenförmigen Effektpigmenten masseeingefärbt ist.

4. Verfahren gemäß einem oder mehreren der Ansprüche 1 bis 3,
**dadurch gekennzeichnet, dass** es sich bei dem dreidimensionalen Muster um ein makroskopisches Muster in Form eines figürlichen Objektes, eines alphanumerischen Motivs, eines Strich- und/oder Punktmusters, eines Logos, einer Codierung oder eines Fantasiemusters handelt.

5. Verfahren gemäß einem oder mehreren der Ansprüche 1 bis 4,
**dadurch gekennzeichnet, dass** die plättchenförmigen Effektpigmente ausgewählt sind aus der Gruppe Perlglanzpigmente, Interferenzpigmente, Metalleffektpigmente, plättchenförmige. funktionelle Pigmente, plättchenförmige strukturierte Pigmente, oder ein Gemisch aus diesen.

6. Verfahren gemäß einem oder mehreren der Ansprüche 1 bis 5,
**dadurch gekennzeichnet, dass** die plättchenförmigen Effektpigmente eine Teilchengröße im Bereich von 5 bis 250 µm und ein Aspektverhältnis von mindestens 2 aufweisen.

7. Verfahren gemäß einem oder mehreren der Ansprüche 1 bis 6,
**dadurch gekennzeichnet, dass** die plättchenförmigen Effektpigmente aus einem plättchenförmigen Substrat und einer oder mehreren Schichten auf dem Substrat bestehen, wobei sich das Substrat und die sich direkt auf dem Substrat befindliche Schicht und/oder mindestens zwei jeweils benachbarte Schichten untereinander in ihren Brechzahlen n mindestens um Δn=0,1 unterscheiden.

8. Verfahren gemäß einem oder mehreren der Ansprüche 1 bis 7,
**dadurch gekennzeichnet, dass** die plättchenförmigen Effektpigmente in der pigmentierten thermoplastischen Folie in einer Menge von 0,1 bis 20 Gew.-%, bezogen auf das Gesamtgewicht der pigmentierten Folie, enthalten sind.

9. Verfahren gemäß einem oder mehreren der Ansprüche 1 bis 7,
**dadurch gekennzeichnet, dass** die pigmentierte thermoplastische Folie zusätzlich zu den plättchenförmigen Effektpigmenten noch weitere organische oder anorganische Farbpigmente, Farbstoffe und/oder Füllmittel enthält.

10. Formkörper, welcher wenigstens aus einem Vorformling, einer sich auf dem Vorformling befindenden Zwischenschicht aus einem thermoplastischen Kunststoff, die mit plättchenförmigen Effektpigmenten pigmentiert ist, und einer äußeren Oberflächenschicht aus einem transparenten thermoplastischen Kunststoff besteht, wobei die äußere Oberflächenschicht auf mindestens einer Teilfläche davon ein optisch wahrnehmbares, im Inneren des Formkörpers von den plättchenförmigen Effektpigmenten gebildetes, virtuelles dreidimensionales Muster zeigt, und wobei die äußere Oberflächenschicht des Formkörpers selbst kein entsprechendes räumliches dreidimensionales Muster aufweist, erhalten nach einem oder mehreren der Ansprüche 1 bis 9.

11. Formkörper gemäß Anspruch 10, **dadurch gekennzeichnet, dass** es sich um einen polymeren Formkörper oder um einen Verbundformkörper handelt.

12. Polymerer Formkörper gemäß Anspruch 10 oder 11, **dadurch gekennzeichnet, dass** die plättchenförmige Effektpigmente jeweils eine. Längsachse aufweisen und diese Längsachsen in der Zwischenschicht in unterschiedlicher Orientierung, relativ zu einer Grundfläche der Zwischenschicht, vorliegen.

13. Polymerer Formkörper gemäß einem oder mehreren der Ansprüche 10 bis 12, **dadurch gekennzeichnet, dass** der Vorformling transparent, transluzent oder opak ist.

14. Verwendung eines polymeren Formkörpers gemäß einem oder mehreren der Ansprüche 10 bis 13 als dekoratives und/oder kennzeichnendes Element oder Teil von Gebrauchsgütern.

15. Verwendung gemäß Anspruch 14, **dadurch gekennzeichnet, dass** es sich bei den Gebrauchsgütern um Verpackungen, Erzeugnisse der Elektro- und Elektronikindustrie, Haushaltsgeräte, Möbel, Bekleidung, Täschnerwaren, Schuhe, Sportartikel oder Fahrzeuge handelt.

## Claims

1. Injection-moulding process for the generation of virtual three-dimensional patterns in mouldings, where
- an injection mould is provided which has injection mould parts A and B which can be separated from one another and which in each case have an inside surface A' and B' and together form an internal cavity, and where, with the injection mould opened,
- a preform which has a two- or three-dimensional shape and an outside surface is fixed to the inside surface A' of injection mould part A in such a way that the outside surface of the preform faces the cavity, where this outside surface has, at least on a part-area thereof, bumps and/or pits which together form a three-dimensional pattern,
- a thermoplastic film which has been pigmented with flake-form effect pigments is introduced into the internal cavity,
- the injection mould is closed,
- a transparent thermoplastic melt is introduced into the internal cavity between the thermoplastic film and the surface B' of injection mould part B, where the thermoplastic film forms a strongly adherent and positive connection to at least that part of the outside surface of the pre-form that contains the three-dimensional pattern and at the same time to the thermoplastic melt, and
- where the flake-form effect pigments replicate and optically enhance the three-dimensional pattern located on the outside surface of the preform on or in the thermoplastic film,
- the injection mould is heated or cooled and subsequently
- the resultant moulding, which has an outside surface of a transparent thermoplastic and exhibits on at least part of this outside surface a virtual three-dimensional pattern formed by the flake-form effect pigments, is demoulded or removed.

2. Process according to Claim 1, **characterised in that** it is carried out at least at a temperature which is at or above the glass transition temperature T_{G} of the thermoplastic film.

3. Process according to Claim 1 or 2, **characterised in that** the thermoplastic film has been mass-coloured with flake-form effect pigments.

4. Process according to one or more of Claims 1 to 3, **characterised in that** the three-dimensional pattern is a macroscopic pattern in the form of a pictorial object, an alphanumeric motif, a line and/or dot pattern, a logo, a code or a an abstract pattern.

5. Process according to one or more of Claims 1 to 4, **characterised in that** the flake-form effect pigments are selected from the group pearlescent pigments, interference pigments, metal-effect pigments, flake-form functional pigments, flake-form structured pigments, or a mixture thereof.

6. Process according to one or more of Claims 1 to 5, **characterised in that** the flake-form effect pigments have a particle size in the range from 5 to 250 µm and an aspect ratio of at least 2.

7. Process according to one or more of Claims 1 to 6, **characterised in that** the flake-form effect pigments consist of a flake-form substrate and one or more layers on the substrate, where the substrate and the layer located directly on the substrate and/or at least two layers which are in each case adjacent differ from one another in their refractive indices n at least by Δn=0.1.

8. Process according to one or more of Claims 1 to 7, **characterised in that** the flake-form effect pigments are present in the pigmented thermoplastic film in an amount of 0.1 to 20% by weight, based on the total weight of the pigmented film.

9. Process according to one or more of Claims 1 to 7, **characterised in that** the pigmented thermoplastic film, in addition to the flake-form effect pigments, also comprises further organic or inorganic coloured pigments, dyes and/or fillers.

10. Moulding which consists at least of a preform, an interlayer, located on the preform, of a thermoplastic which has been pigmented with flake-form effect pigments, and an outer surface layer of a transparent thermoplastic, where the outer surface layer exhibits on at least one part-area thereof a visually perceptible, virtual three-dimensional pattern which is formed in the interior of the moulding by the flake-form effect pigments, and where the outer surface layer of the moulding itself does not have a corresponding spatial three-dimensional pattern, obtained according to one or more of Claims 1 to 9.

11. Moulding according to Claim 10, **characterised in that** it is a polymeric moulding or a composite moulding.

12. Polymeric moulding according to Claim 10 or 11, **characterised in that** the flake-form effect pigments in each case have a longitudinal axis and these longitudinal axes have different orientations in the interlayer, relative to a base area of the interlayer.

13. Polymeric moulding according to one or more of Claims 10 to 12, **characterised in that** the preform is transparent, translucent or opaque.

14. Use of a polymeric moulding according to one or more of Claims 10 to 13 as decorative and/or labelling element or part of durable consumer goods.

15. Use according to Claim 14, **characterised in that** the durable consumer goods are packaging, products in the electrical and electronics industry, domestic appliances, furniture, clothing, bags, shoes, sports articles or vehicles.

## Revendications

1. Procédé de moulage par injection pour la génération de motifs tridimensionnels virtuels selon des moulages, dans lequel :
- un moule à injection est prévu, lequel comporte des parties de moule à injection A et B qui peuvent être séparées l'une de l'autre et qui, dans chaque cas, comportent une surface intérieure A' et B' et forment en association une cavité interne, et dans lequel, tandis que le moule à injection est ouvert,
- une préforme qui présente une forme bidimensionnelle ou tridimensionnelle et qui comporte une surface extérieure est fixée sur la surface intérieure A' de la partie de moule à injection A de telle sorte que la surface extérieure de la préforme fasse face à la cavité, dans lequel cette surface extérieure comporte, au moins sur son aire partielle, des bossages et/ou des piqûres qui forment en association un motif tridimensionnel,
- un film thermoplastique qui a été pigmenté à l'aide de pigments d'effet sous forme de flocons est introduit à l'intérieur de la cavité interne,
- le moule à injection est fermé,
- de la matière thermoplastique fondue transparente est introduite à l'intérieur de la cavité interne entre le film thermoplastique et la surface B' de la partie de moule à injection B, dans lequel le film thermoplastique forme une connexion fortement adhérente et positive sur au moins la partie de la surface extérieure de la préforme qui contient le motif tridimensionnel et dans le même temps sur la matière thermoplastique fondue, et
- dans lequel les pigments d'effet sous forme de flocons se reproduisent et améliorent optiquement le motif tridimensionnel qui est localisé sur la surface extérieure de la préforme sur ou dans le film thermoplastique,
- le moule à injection est chauffé ou refroidi et subséquemment
- le moulage résultant, qui comporte une surface extérieure en matériau thermoplastique transparent et qui présente, sur au moins une partie de cette surface extérieure, un motif tridimensionnel virtuel qui est formé par les pigments d'effet sous forme de flocons, est démoulé ou ôté.

2. Procédé selon la revendication 1, **caractérisé en ce qu'**il est mis en œuvre au moins à une température qui est à la température de transition vitreuse T_{G} du film thermoplastique ou au-delà de celle-ci.

3. Procédé selon la revendication 1 ou 2, **caractérisé en ce que** le film thermoplastique a été coloré dans la masse à l'aide de pigments d'effet sous forme de flocons.

4. Procédé selon une ou plusieurs des revendications 1 à 3, **caractérisé en ce que** le motif tridimensionnel est un motif macroscopique qui se présente sous la forme d'un objet pictural, d'un motif alphanumérique, d'un motif de ligne(s) et/ou de point(s), d'un logo, d'un code ou d'un motif abstrait.

5. Procédé selon une ou plusieurs des revendications 1 à 4, **caractérisé en ce que** les pigments d'effet sous forme de flocons sont sélectionnés parmi le groupe qui est constitué par les pigments perlescents, les pigments d'interférence, les pigments à effet métallique, les pigments fonctionnels sous forme de flocons, les pigments structurés sous forme de flocons et des mélanges de ceux-ci.

6. Procédé selon une ou plusieurs des revendications 1 à 5, **caractérisé en ce que** les pigments d'effet sous forme de flocons présentent une taille de particule dans la plage qui va de 5 à 250 µm et un rapport d'aspect d'au moins 2.

7. Procédé selon une ou plusieurs des revendications 1 à 6, **caractérisé en ce que** les pigments d'effet sous forme de flocons sont constitués par un substrat sous forme de flocons et par une ou plusieurs couche(s) sur le substrat, dans lequel le substrat et la couche qui est localisée directement sur le substrat et/ou au moins deux couches qui sont dans chaque cas en adjacence diffèrent les unes des autres du point de vue de leurs indices de réfraction n d'au moins Δn = 0,1.

8. Procédé selon une ou plusieurs des revendications 1 à 7, **caractérisé en ce que** les pigments d'effet sous forme de flocons sont présents dans le film thermoplastique pigmenté selon une quantité qui va de 0,1 à 20 % en poids, sur la base du poids total du film pigmenté.

9. Procédé selon une ou plusieurs des revendications 1 à 7, **caractérisé en ce que** le film thermoplastique pigmenté comprend également, en plus des pigments d'effet sous forme de flocons, d'autres pigments colorés organiques ou inorganiques, des colorants et/ou des agents de remplissage.

10. Moulage qui est constitué par au moins une préforme, une inter-couche qui est localisée sur la préforme et qui est constituée par un matériau thermoplastique qui a été pigmenté à l'aide de pigments d'effet sous forme de flocons, et une couche de surface externe en un matériau thermoplastique transparent, dans lequel la couche de surface externe présente sur au moins son aire partielle un motif tridimensionnel virtuel perceptible visuellement qui est formé dans l'intérieur du moulage par les pigments d'effet sous forme de flocons, et dans lequel la couche de surface externe du moulage lui-même ne comporte pas un motif tridimensionnel spatial correspondant, obtenu selon une ou plusieurs des revendications 1 à 9.

11. Moulage selon la revendication 10, **caractérisé en ce qu'**il s'agit d'un moulage polymérique ou d'un moulage composite.

12. Moulage polymérique selon la revendication 10 ou 11, **caractérisé en ce que** les pigments d'effet sous forme de flocons comportent dans chaque cas un axe longitudinal et ces axes longitudinaux présentent des orientations différentes dans l'inter-couche, par rapport à une zone de base de l'inter-couche.

13. Moulage polymérique selon une ou plusieurs des revendications 10 à 12, **caractérisé en ce que** la préforme est transparente, translucide ou opaque.

14. Utilisation d'un moulage polymérique selon une ou plusieurs des revendications 10 à 13 en tant qu'élément décoratif et/ou d'étiquetage ou que partie de biens de consommation durables.

15. Utilisation selon la revendication 14, **caractérisée en ce que** les biens de consommation durables sont des emballages, des produits relevant de l'industrie électrique et électronique, des appareils domestiques, des meubles, des vêtements, des sacs, des chaussures, des articles de sport ou des véhicules.
